# EUROPEAN PATENT SPECIFICATION

(11) **EP 0 826 629 B1**
(45) Date of publication and mention of the grant of the patent: **20.11.2002**
(21) Application number: 97305948.8
(22) Date of filing: 05.08.1997
(51) Int. Cl.: C01B 23/00, B01D 53/00, B01D 53/02, B01D 53/22, H01J 9/38, F25J 3/06

(54) **Recovery of noble gases**
Rückgewinnung von Edelgasen
Récupération de gaz nobles

(30) Priority: 27.08.1996 US 703711; 27.06.1997 US 884421
(43) Date of publication of application: 04.03.1998
(73) Proprietor: THE BOC GROUP, INC., Murray Hill, New Providence, New Jersey 07974-2082 (US)
(72) Inventor: Jain, Ravi, Bridgewater, New Jersey 08807 (US); Whitlock, Walter H., Chapel Hill, North Carolina 27516 (US)
(74) Representative: MacLean, Martin David

(56) References cited:
- EP-A- 0 727 557

## Description

This invention relates to the recovery of noble gases such as xenon, neon and krypton from gas mixtures, and more particularly to the recovery of mixtures of xenon and neon from plasma display panel sealing furnaces.

Plasma display panels are used in the manufacture of flat screen displays for televisions and computer monitors. European Patent Application No. 0 698 903 describes a plasma display panel containing a rare earth gas mixture comprised of neon and argon, xenon and/or krypton. Plasma display panels are generally manufactured by joining pairs of flat sheets of material with appropriate display circuitry in such a manner that an enclosed space is formed between the sheets. The enclosed space is filled with a noble gas, preferably xenon, neon or a mixture of the two, and the two sheets of material are sealed together to form the display panel. A convenient method of making the panels is to apply an adhesive binder to the edge areas of the sheet material and line up pairs of the binder-containing sheet material in a gas-tight sealing oven, evacuate the oven, charge the inert gas or inert gas mixture into the oven and heat the oven to a temperature sufficient to seal the pairs of sheet material together in a gas-tight construction, thereby forming the panels.

When display panels are manufactured in this manner the space within the enclosed panels accounts for only a small volume of the total volume in the sealing ovens such that the amount of gas used for filling the panels may be less than 10% of the total volume of the oven. The remaining volume of gas in the oven is excess. Since the noble gases used in the manufacture of display panels are very expensive gases, it is highly desirable to recover for recycle as much of the excess noble gases as possible.

One method of gas recovery that can be practised is to evacuate the gas furnace after the panels are sealed. This method has the advantage of recovering the noble gas in a relatively pure form, i.e. it contains, in addition to the noble gas, only the gases formed during the heat sealing process and atmospheric gases that leak into the furnace or recovery system during evacuation. Unfortunately, this method is not suitable for the recovery of the noble gas used with plasma displays because the sealed display panels will break in the sealing ovens if they are subjected to the very low pressures required to effect the high recovery necessary to make the process cost effective.

Because of the very high cost of xenon and neon, methods of recovering substantially all of the excess of these gases from the plasma display panel sealing furnaces without damaging the display panels are constantly being sought.

EP 0 727 557 A1 shows a process for introducing a filling gas into an enclosure initially containing a holding gas includes a step of introduring the filling gas into the enclosure as well as a step of extracting a specific gas initially contained in the filling gas or the holding gas from a mixture collected at the outlet of the enclosure, and possibly a step of recycling this extracted specific gas. Before the step of introducing the filling gas, the enclosure is purged using a purging gas which differs from the fill and holding gases.

The present invention is directed towards the problem of maximising the recovery of noble gas, whilst minimising the amount of noble gas used so as to avoid wastage thereof, in a treatment operation involving the use of substantially pure noble gas.

Accordingly, the present invention provides a method of recovering noble gas from a chamber in which a treatment operation involving the use of substantially pure noble gas is carried out, the method comprising:
a) evacuating the chamber;
b) introducing the noble gas into the chamber so as to perform the treatment operation;
c) passing a purge gas through the chamber, thereby purging substantially all of the noble gas from the chamber and producing a gaseous effluent comprising the noble gas and the purge gas;
d) separating a noble gas stream and a substantially noble gas-free fraction from the gaseous effluent, and
e) removing trace impurities from the noble gas stream, rendering the noble gas stream sufficiently pure as to be recyclable for re-use in the said treatment operation.

The invention is applicable in circumstances where a noble gas, preferably one selected from xenon, neon, argon, krypton and mixtures of these, is used in a process carried out in a closed chamber. Unused noble gas is recovered from the chamber for reuse by purging the chamber with a purge gas thereby producing a gaseous effluent comprising the noble gas and the purge gas. The purge gas is preferably selected from hydrogen, steam, ammonia, carbon dioxide, carbon monoxide, oxygen, and hydrocarbons having 2 to 6 carbon atoms. A noble gas stream is separated from the effluent, preferably by membrane separation, condensation, adsorption, absorption, crystallisation or combinations of these. The noble gases discussed in this invention can be used for producing arc lamps, plasma display panels, neon display signs, etc.

In a specific application, the closed chamber may form part of a furnace, and prior to the purge step, display panels containing noble gas are manufactured in the chamber by heat sealing pairs of planar sections together to form a gas-tight enclosure in an atmosphere containing about 50 to about 100 volume % neon and about 50 to about 0 volume % xenon. The panels are preferably made by applying a bead of heat sensitive adhesive around the periphery of one or both of the planar sections and the sections are sealed together by heating them in close proximity to each other to a temperature of at least about 350°C at a pressure of about 1.5 to about 2 bar, absolute (bara).

In a preferred embodiment, the purge gas is hydrogen and the noble gas stream is separated from the gaseous effluent by membrane separation using a membrane which comprises palladium. In this embodiment the membrane is preferably operated to produce substantially pure hydrogen as the permeate gas and substantially pure noble gas as the residue gas, and one or both of these are recycled to the closed chamber with or without further purification. The membrane separation is carried out at a temperature of about 200°C to about 600°C and a pressure of about 3 to about 40 bara. In a preferred aspect of this embodiment, any carbon oxides present in the gaseous effluent are removed therefrom prior to the membrane separation step. Also in this embodiment, if the noble gas stream contains oxygen as the impurity, the palladium effects the reaction of the oxygen and hydrogen to produce water vapour on the residue side of the membrane. The water vapour is preferably removed from the noble gas stream by subjecting the noble gas stream to a temperature swing adsorption process using a desiccant selected from silica gel, activated alumina, and A or X zeolites such as zeolite 5A or zeolite 13X and mixtures of any of these.

Alternatively, the purge gas may be oxygen and the noble gas separated from the gaseous effluent by membrane separation using an oxygen-ion-conducting membrane.

In another embodiment, the purge gas may be steam and the noble gas stream separated from the gaseous effluent by condensation.

The noble gas stream may contain small amounts of impurities selected from water vapour, carbon monoxide, carbon dioxide, hydrogen, oxygen, argon, nitrogen, hydrocarbons and mixtures of two or more of these. In such case, the impurities may be removed from the noble gas stream after the removal of purge gas by one or more of:
(a) adsorption at a temperature in the range of about ambient temperature (defined below) to about 150°C using one or more adsorbents which selectively adsorb water vapour, carbon dioxide and unsaturated hydrocarbons, such as acetylene, ethylene and hydrocarbons having 3 or more carbon atoms or mixtures of these;
(b) chemisorption using one or more getter materials which chemisorb hydrogen, oxygen, carbon monoxide or mixtures thereof;
(c) catalytic oxidation of hydrogen to water and/or catalytic oxidation of carbon monoxide to carbon dioxide;
(d) cryogenic adsorption using one or more adsorbents which selectively adsorb nitrogen, carbon monoxide, methane, ethane or mixtures of two or more of these; and
(e) chemisorption using one or more getter materials which adsorb nitrogen, hydrocarbons or mixtures thereof.

When the noble gas stream contains as an impurity one or more of water vapour, carbon dioxide and unsaturated hydrocarbons or hydrocarbons having 3 or more carbon atoms, the impurity is preferably removed from the noble gas stream by method (a), above, carried out at a temperature in the range of about 0°C to about 100°C using an adsorbent selected from silica gel, activated alumina, zeolites, activated carbon and mixtures of these.

When the noble gas stream contains as an impurity one or both of hydrogen, and oxygen, these are preferably removed from the noble gas stream by step (b), above, carried out at a temperature in the range of about 20°C to about 200°C using a copper getter, a copper-oxide getter, a nickel getter or mixtures of these, or by step (c), above, by adding excess oxygen to the gas mixture, if necessary, and reacting these impurities by contact with a catalyst such as a supported palladium catalyst. If water vapour is formed as the noble gas stream contacts the getter, the water vapour is preferably removed by contacting the noble gas stream with a desiccant selected from silica gel, activated alumina, zeolite A, zeolite X and mixtures of these.

When the noble gas stream contains as an impurity one or more of nitrogen, methane, ethane and carbon monoxide, the impurity is preferably removed from the noble gas stream by method (d), above, carried out at a temperature in the range of about -50°C to about -200°C using an adsorbent selected from zeolite 4A, zeolite 5A, type X zeolite, type Y zeolite, mordenites, clinoptilolites and mixtures of these.

Should the noble gas stream contain nitrogen, hydrocarbons or mixtures of these, these may be removed from the noble gas stream by method (e), above, carried out at a temperature in the range of about 350°C to about 700°C using a zirconium-based material. Preferably, the zirconium-based material is a zirconium-alloy. Most preferably, the zirconium-based alloy is a zirconium-aluminium alloy, a zirconium-vanadium-iron alloy or a mixture of these. This step is preferred when the noble gas stream contains only nitrogen and hydrocarbons after completion of steps (a), (b) and/or (c).

The present invention also provides an apparatus for sealing noble gas within plasma display panels.

Embodiments of the invention will now be described by way of example and with reference to the accompanying drawings, in which:
Figure 1 is a schematic representation of a first system for recovering a noble gas from a treatment vessel using a permeable membrane to separate the noble gas from the purge gas; and
Figure 2 is a schematic representation of an alternate system for recovering a noble gas from a treatment vessel wherein condensation is used to separate the noble gas from the purge gas.
Figure 3 is a schematic representation of a system similar to the system illustrated in Figure 1, but including a carbon oxides gas removal unit.

Like reference characters are used in the various figures to designate like parts or the same equipment units. Only equipment, valves and lines that are necessary for an understanding of the invention have been included in the drawing figures.

As used in this specification, the term "ambient temperature" means a temperature in the range of about -30°C to about 50°C.

The plasma display panels manufactured by the process of the invention are made by joining two planar sections of sheet material together in such a manner that an enclosed envelope is created between the sections. The sections may be made of glass, plastic or other suitable material and they may be clear, translucent or opaque. These sections also contain appropriate coatings and circuitry for displaying images. They are joined together by an adhesive which forms a continuous seal around the edges of the sections. The planar sections may be flat, or one or both of the sections may be curvilinear.

In manufacturing noble gas-filled panels according to the procedure of the invention, pairs of panel sections are placed in the furnace and positioned such that the mating sections face each other, with the bead of adhesive between the mating sections, and with both sections in contact with the adhesive. The furnace is then evacuated, preferably to a pressure of 0.0001 to 0.00001 bara (10 to 1 Pa), to remove all traces of gas impurities, and the furnace is heated to a temperature of about 400°C. When the furnace interior reaches 400°C the noble gas, generally xenon or a mixture of xenon and neon, is charged into the furnace to a pressure of about 1.5 to about 3.0 bara (about 150 to about 300 kPa). The adhesive softens and adheres to each section of the panels. The furnace is then allowed to cool. When the temperature in the furnace drops to about 350°C, additional noble gas is introduced into the furnace to maintain the pressure therein at about 1.5 to about 3.0 bara (about 150 to about 300 kPa). As the furnace temperature drops the adhesive sets and forms a gas-tight seal between the panel sections, thereby sealing noble gas within the panels. When the temperature in the furnace drops below about 350°C, excess noble gas is removed from the furnace by passing a purge gas through the furnace. The purge is continued until substantially all of the noble gas is purged from the furnace.

It is desirable to recycle both the noble gas and the purge gas to the furnace in subsequent panel manufacturing operations. Accordingly, it is necessary to separate these gases in a manner that results in the recovery of substantially pure noble gas and substantially pure purge gas. The method of gas separation depends upon the particular purge gas selected for use in the process.

Purge gases useful in the process of the invention include hydrogen, steam, ammonia, carbon dioxide, carbon monoxide, lower hydrocarbons and oxygen. As used in this specification, the term "lower hydrocarbons" means ethylene, propylene and saturated or ethylenically unsaturated hydrocarbons (i.e. alkanes or alkenes) having four to six hydrocarbons. Included in this group are ethylene, propylene, the butanes, the butenes, the pentanes, the pentenes, the hexanes the hexenes, and mixtures of two or more of these. It is desirable that the purge gas be substantially pure, since a given noble gas-purge gas separation method is generally highly effective only for a selected purge gas. Thus, for example, when the purge gas is oxygen and the noble gas-purge gas separation technique is membrane separation using an ionic membrane, the oxygen should be substantially free of impurities such as nitrogen and argon, since these gases are not removed from the noble gas with the oxygen.

The noble gas-purge gas separation technique used in the practice of the invention depends upon the particular purge gas used in the process. If it is desirable to recycle the purge gas a method of separation is employed which affords separation of substantially pure purge gas. For example, substantially noble gas-free hydrogen and substantially hydrogen-free noble gas can be obtained when the purge gas is hydrogen and the method of purge gas-noble gas separation is by membranes. Membrane separation also provides a substantially clean separation when oxygen is used as the purge gas. On the other hand, if the purge gas is relatively inexpensive and can be easily disposed of, or if it cannot be separated from the noble gas in substantially pure form, techniques such as condensation can be conveniently used. Such is the case with steam.

Membrane separation using a palladium membrane is preferably employed as the gas recovery method when the purge gas is hydrogen. Membrane separation, using an oxygen-ion-conducting membrane is useful when the purge gas is oxygen. Condensation is preferably employed when the purge gas is steam, and this method of gas recovery can also be used when the purge gas is a hydrocarbon having a relatively high boiling point. Absorption, using copper aluminium chloride (CuAlCl₄) as the absorbent, is preferably employed when the purge gas is carbon monoxide; absorption using amines as the absorbent is preferably employed when purge gas is carbon dioxide; absorption, using higher hydrocarbons (alkanes and/or alkenes having seven or more carbon atoms) as the absorbent is preferably employed when the purge gas is a lower hydrocarbon; and absorption using water as the absorbent is preferably used when the purge gas is ammonia.

Impurities remaining in the separated noble gas can be removed by one or more of various techniques. Trace amounts of hydrogen and/or oxygen can be removed from the noble gas by passing the gas through a bed of copper or nickel getter at a temperature in the range of about 25°C to about 200°C.

A catalyst for oxygen removal containing 30wt % copper on a carrier substrate is available from BASF Corporation under the trade designation Catalyst R3-11. The catalyst can be used to remove oxygen from inert gases by gettering at temperatures up to 250° C., and the catalyst can be regenerated by reduction with hydrogen.

A one-step process for the removal of impurities selected from oxygen, carbon monoxide, carbon dioxide, hydrogen, water, or mixtures of these at less than 1000ppmv in an inert gas is disclosed in US Patent No. 4,713,224. The gas is passed over a getter comprising at least 5wt % nickel at a temperature between 0°C and 50°C. and a product containing less than several ppmv impurities is obtained. The catalyst is regenerated by purging with nitrogen and hydrogen at 180° to 200°C.

In the context of the present invention the getter is used only for oxygen and hydrogen removal.

Water vapour can be removed using temperature swing adsorption (TSA) by passing the separated noble gas through a desiccant, such as silica gel or activated alumina. Carbon dioxide can be removed by TSA using an adsorbent such as zeolite molecular sieve, or activated alumina (including modified aluminas). Nitrogen, methane, ethane, and carbon monoxide can be removed from the separated noble gas by cryogenic adsorption using adsorbents such as CaX zeolite, NaX zeolite, type A zeolites, type Y zeolites, mordenites or clinoptilolites at temperatures in the range of about -50°C to about -200°C. Nitrogen and hydrocarbons can also be removed from the noble gas using zirconium alloys, such as zirconium-vanadium alloy.

The above separation techniques are all part of the prior art and the details of the various separations form no part of this invention.

The most preferred method of practising the invention is to use hydrogen as the purge gas and membrane separation using a palladium membrane as the primary noble gas recovery technique. This method is most preferred because substantially noble gas-free hydrogen and substantially hydrogen-free noble gas are obtained by this technique. An additional advantage of this method is that if oxygen is present in the purged gas stream it will react with hydrogen and form water as it contacts the palladium membrane. The water vapour can be easily removed in a secondary noble gas purification step by passing the separated noble gas through a desiccant, as described above. When hydrogen is used as the purge gas and a palladium membrane is used to separate hydrogen from the noble gas, it is generally preferable to remove carbon oxides from the hydrogen-noble gas mixture prior to introducing the gas mixture into the palladium membrane unit to prevent the formation of methane by reaction of the carbon oxides with hydrogen upon contact with the palladium membrane.

In another preferred embodiment, steam is used as the purge gas and condensation is used as the separation technique. Residual moisture in the purified noble gas stream can be removed by drying the noble gas using a desiccant which has a strong affinity for water vapour but not for the noble gas. The condensed moisture can be discarded.

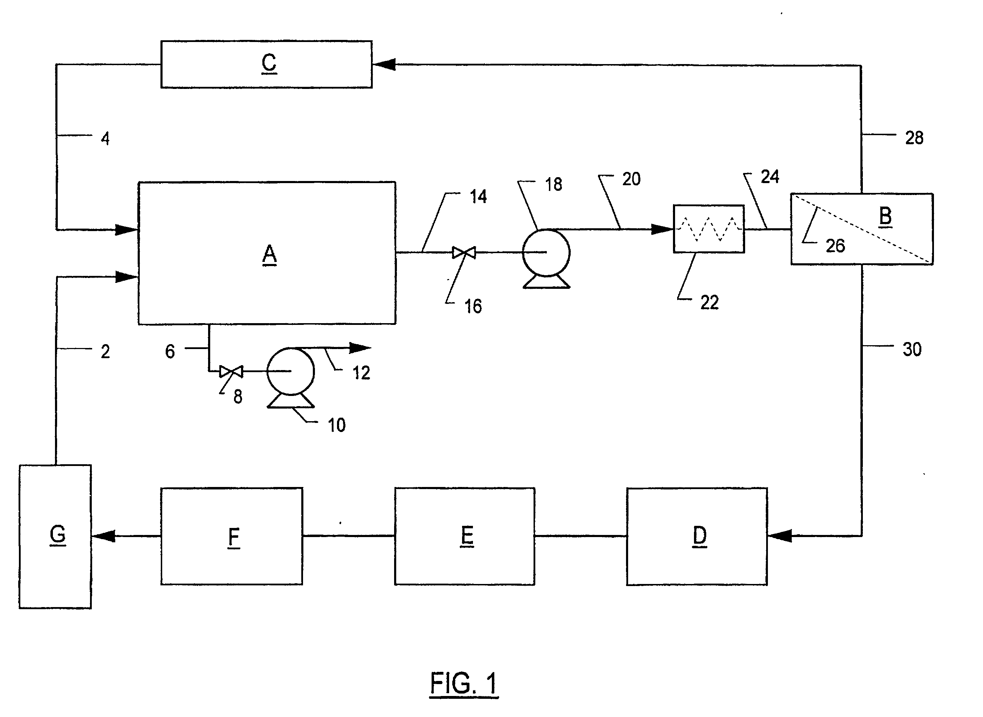

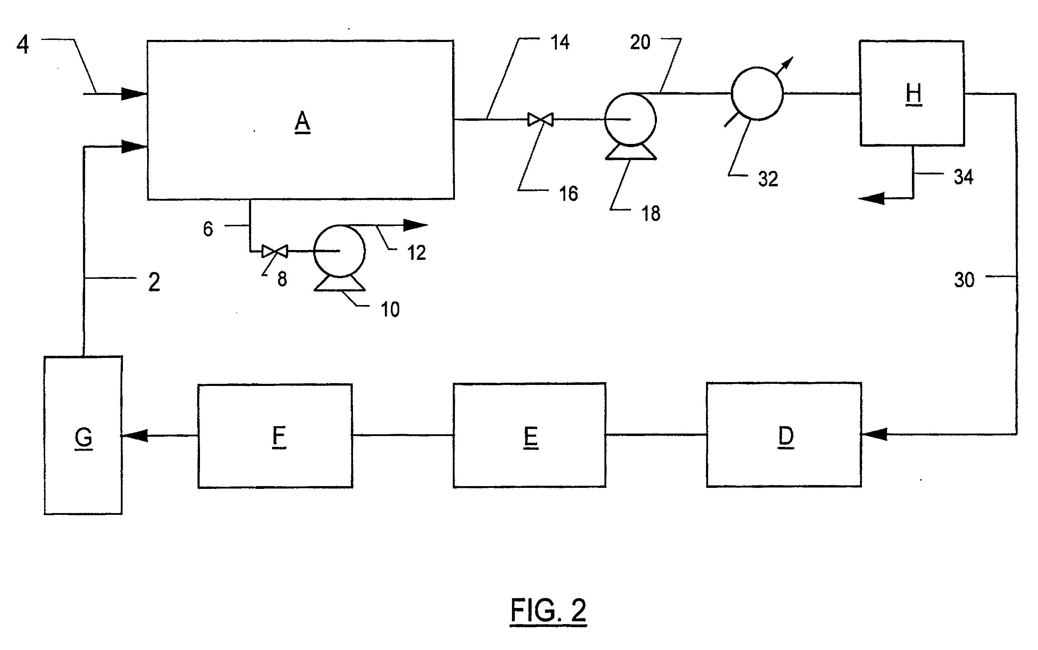

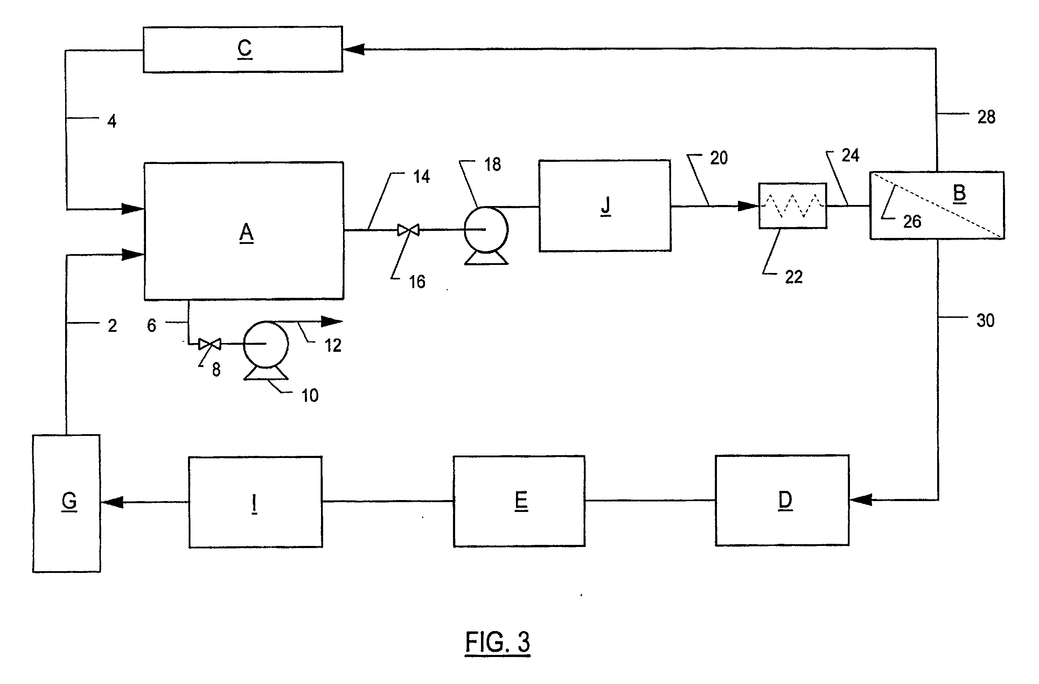

Referring now to the appended drawings, these show three of the various embodiments of a system for purging a noble gas from a treatment chamber and for separating the noble gas from the purge gas. The methods illustrated in Figures 1 and 3 provide for recovery and recycle of both the noble gas and the purge gas, and the method illustrated in Figure 2 provides for recovery of only the noble gas.

The system illustrated in Figure 1 is a preferred system when the hydrogen-noble gas mixture being separated contains very little or no carbon oxides. Referring now to Figure 1, the system illustrated therein includes, as major equipment units, gas treatment chamber A, membrane separation unit B, purge gas storage vessel C, optional catalytic getter purifier D, ambient temperature adsorption system E, optional cryogenic adsorption system F and noble gas storage vessel G. All of the individual equipment units are well known, and their design and operation forms no part of the present invention.

Gas treatment chamber A may be any vessel in which a treatment operation involving the use of substantially pure xenon, neon, krypton or mixtures of these is carried out. In this description, chamber A is depicted as part of as a gas-tight furnace in which plasma display panels are manufactured. As such, it is equipped with doors for loading the display panel sections into the unit and with heating means to heat the chamber contents to the desired temperature. Chamber A is provided with noble gas supply line 2, which provides fluid communication between chamber A and noble gas storage vessel G, and with purge gas supply line 4, which connects purge gas storage vessel C to chamber A. Chamber A is also provided with evacuation line 6 and purged gas line 14.

Line 6 is provided with valve 8 and vacuum pump 10. Vacuum pump 10 is capable of evacuating chamber A to an pressure of 0.00001 bara (1 Pa). The discharge end of vacuum pump 10 is connected to line 12 which can be connected to an atmospheric vent or to gas recovery means (not shown). Line 14, provided with valve 16, joins the purge gas outlet of chamber A to the inlet end of compressor 18. Compressor 18 is capable of increasing the pressure of the gas mixture in line 14 to that required for effective performance of membrane separation unit B. This pressure is typically in the range of about 4 to about 40 bara (about .4 to about 4 mPa). The discharge end of compressor 18 is connected to line 20, which, in turn, is connected to the inlet end of gas heater 22.

The outlet end of heater 22 is connected to the inlet end of membrane separation unit B through line 24. Membrane separation unit B is provided with a metallic membrane 26. Purified purge gas line 28 joins the permeate gas side of membrane 26 to purge gas storage vessel C.

Recovered noble gas line 30 connects the residue gas side of membrane 26 to the inlet end of catalytic getter purifier D, which is an optional unit. Purifier D is packed with a getter material which removes trace quantities of hydrogen and/or oxygen from the noble gas. Suitable getters include nickel- or copper-containing materials. These materials are described above. The getters may be regenerated with nitrogen/hydrogen mixture or nitrogen/oxygen mixture and finally purged with nitrogen which is removed in the downstream cryogenic adsorption unit.

Also located in line 30, preferably downstream of catalytic getter purifier D, is purifier E, which likewise is optional in the system. In the embodiment of the invention illustrated in Figure 1, purifier E is an ambient temperature adsorption unit packed with one or more adsorbents which efficiently remove water vapour, carbon dioxide, heavy hydrocarbons (oils), etc., from the noble gas stream. Adsorbents which do not significantly adsorb neon, argon, xenon or krypton are preferred. Typically purifier E may be packed with a desiccant, such as activated alumina or silica gel, and/or 13X or 5A zeolites, for removal of carbon dioxide, and/or activated carbon, for removal of heavy hydrocarbons. These adsorbents can be regenerated with, for example, dry nitrogen, which will not cause any difficulty during noble gas purification since, as noted above, the downstream cryogenic adsorption unit efficiently removes nitrogen from the purified noble gas stream.

Located in line 30, downstream of purifier E is optional cryogenic adsorption purifier F. This adsorption unit is packed with an adsorbent which removes trace amounts of nitrogen, carbon monoxide and/or methane/ethane from the noble gas. A suitable adsorbent for this purifier is calcium-exchanged type A zeolite. Other adsorbents, such as type X zeolites, type Y zeolites, mordenites, etc. can be used in purifier F. The adsorbent in this unit can be regenerated by vacuum, by heating or both and final purging with the noble gas.

Practice of the process of the invention in the system of Figure 1 is as follows. A bead of heat-sensitive adhesive is placed around the periphery of one or both members of each pair of plasma display panel sections to be joined together. The sections are then placed in chamber A with the sections of mating pairs positioned in close proximity to each other. The chamber is then closed and vacuum pump 10 is activated with valve 8 open to the atmosphere, and chamber A is evacuated to an absolute pressure in the range of about 0.0001 to about 0.00001 torr (about 0.013 to about 0.0013 Pa). During this step valve 16 may be open or closed, depending on whether it is desired to evacuate the downstream part of the system. Valve 8 is then closed and the temperature in chamber A is raised to about 400°C and a noble gas, which may be xenon, neon, argon or krypton, or mixtures of these, such as a mixture of xenon and neon, is charged into the chamber. A preferred noble gas mixture is 95% neon and 5% xenon (molar %). The noble gas is preferably introduced into chamber A when the temperature reaches 400°C, but it may be charged into chamber A before or during heating of the chamber. Sufficient noble gas is introduced into chamber A to raise the pressure therein to about 1.6 to about 1.7 bara (about 160 to about 170 kPa). As the temperature in chamber A approaches 400°C, the bead of adhesive softens and becomes tacky. When the temperature inside chamber A reaches 400°C, the heating means is inactivated and the chamber is allowed to cool. As the chamber cools the pressure inside the chamber drops. When the temperature reaches 350°C sufficient additional noble gas is charged into chamber A to again raise the pressure therein to about 1.6 to 1.7 bara (about 160 to 170 Pa). As the temperature inside chamber A continues to fall, the adhesive is set up and seals the two sections of each pair of mating panel sections together, with the desired quantity of noble gas sealed within the closed panel. As the temperature in chamber A falls below about 350°C valve 16 is opened (if it was closed) and purge gas from storage vessel C is introduced into vessel A. Compressor 18 is activated and is set to draw purged gas from chamber.

Membrane 26 may be any metallic or other membrane that permits the purge gas to pass through its openings without permitting the noble gas to pass through. Heater 22 may be activated or not, depending upon the particular gas that is used as the purge gas. When the purge gas is hydrogen, the membrane is preferably palladium and heater 22 is set to heat the purged gas stream to about 400°C and compressor 18 is set to raise the pressure of the purged gas to about 20 bara 2mPa.

As the purged gas enters separator B the purge gas passes through membrane 26 and leaves separator B through line 28, while the noble gas passes out of separator B through line 30. When the purge gas is hydrogen and the membrane is palladium, very pure hydrogen, for example, greater than 99.999% purity, is obtained, and the high purity hydrogen passes through line 28 to purge gas storage vessel C. Any oxygen that is introduced into the system by leaks, etc. reacts with the hydrogen to form water vapour upon contact with the hot palladium membrane, and the water vapour passes from separator B with the separated noble gas through line 30.

The partially purified noble gas next passes through purifier D, if this unit is included in the system. As noted above, purifier D is a catalytic getter purifier and is designed to remove hydrogen and oxygen impurities in the noble gas. It preferably contains nickel, nickel oxide or more preferably copper oxide for hydrogen removal or metallic nickel or more preferably metallic copper for oxygen removal. It may also contain mixed nickel/nickel oxide or copper/copper oxide or mixtures of these to remove either hydrogen or oxygen or both.

The noble gas next passes through purifier E, if this unit is included in the system. Water vapour, carbon dioxide and higher hydrocarbons, if these are present are removed from the noble gas as it passes through purifier E. As noted above, purifier E may comprise a series of different adsorbent layers, and it is preferably operated on a TSA cycle.

The further purified noble gas leaving purifier E next enters purifier F, if this unit is included in the system. Purifier F contains an adsorbent which removes nitrogen, carbon monoxide, methane and ethane from the noble gas. These gases may be introduced into the purged gas at various parts of the system, for instance due to leakage in the vacuum pump or during the curing of the adhesive beads. Purifier F is operated at cryogenic temperatures using a TSA cycle and selected adsorbents, as noted above.

The purified gas leaving purifier F next passes into noble gas storage vessel G for reuse.

Considering next Figure 2, this system is designed to operate with a purge gas that is not recycled, such as steam. The system shown in Figure 2 contains several of the units that are in the system of Figure 1. However, the Figure 2 system differs from the Figure 1 system in that it includes phase separator H instead of membrane separator B and cooler 32 instead of heater 22. Phase separator H is provided with condensate removal line 34 and separated noble gas discharge line 30.

Practice of the invention in the system of Figure 2 is the similar to that of the system of Figure 1 except that a condensable gas, such as steam or a volatile, normally liquid hydrocarbon (at ambient conditions) is used as the purge gas. These purge gases are recyclable to the extent that they can be reused after they are converted back to their gaseous states. In the system of Figure 2, the purged gas passes through cooler 32, where it is cooled to below its condensation temperature, and then introduced into phase separator H. In separator H the condensed liquid is removed from the system through line 34 and the substantially purge gas-free noble gas passes out of unit H through line 30 and passes through the same series of units that were described above in connection with the Figure 1 system. The gas passes through getter purifier D, if this unit is included in the system. The noble gas exiting purifier D will most likely be saturated with the purge gas. This is desirably removed in purifier E. As noted above, purifier E may contain a desiccant to remove water vapour and/or an adsorbent to removed condensed hydrocarbon. The partially purified noble gas leaving purifier E passes through purifier F, as described above in the discussion of the Figure 1 system, and the purified noble gas leaving purifier F is returned to noble gas storage vessel G for reuse. The condensate recovered from separator H through line 34 can be heated back to the gaseous state and reused, if desired, or it can be disposed of.

The system illustrated in Figure 3 is similar to the Figure 1 system, except that it includes optional carbon oxides removal system J, and unit F is replaced with unit I, which is a high temperature zirconium-based purifier which removes nitrogen and hydrocarbons from the noble gas stream entering this unit.

Carbon oxides removal system J can be included in the system when the gas stream exiting chamber contains carbon monoxide and/or carbon dioxide. It is desirable to remove these gases from the feed to separator B when the membrane in separator B is a palladium membrane to prevent reaction between the carbon oxide(s) and hydrogen to form methane. The removal of these gases can be carried out at temperatures in the range of about ambient temperature to about 1500°C using, for example, a getter, a catalytic reactor or an adsorbent for the carbon monoxide removal and an adsorption unit for the removal of carbon dioxide. All of these systems are well known and the specific details of the various units form no part of the invention. Examples of suitable units for carbon monoxide removal include mixed copper oxide/manganese dioxide getter agent-containing units, noble metal catalyst-containing units, for example supported palladium-containing units, for the catalytic oxidation of carbon monoxide to carbon dioxide and copper-containing adsorbent-containing units. Typical carbon dioxide removal adsorption units include adsorbers packed with modified alumina and/or zeolites, such as zeolite 13 X, zeolite 5A or mixtures of these. The carbon dioxide removal unit is preferably positioned downstream of the carbon monoxide removal unit, particularly when the carbon monoxide removal unit is a catalytic unit which converts carbon monoxide to carbon dioxide.

Unit I contains a zirconium-based material, such as a zirconium-aluminium alloy or a zirconium-vanadium-iron alloy as a getter agent for the removal of nitrogen and/or hydrocarbons from the noble metal gas stream leaving separator B. These materials are well known and details relating to their manufacture and composition form no part of this invention. Rosai and Borghi ("Purification of rare gases and the measurement of low impurity levels, J. Vacuum Sci. Technol, Vol 11, No 1, pp 347-350, 1973) report the use of 84% Zr-16% Al getter for the removal of fixed gases to "non-detectable" levels. The removal of simple hydrocarbons from rare gas using a 70% Zr-25% V-5% Fe getter is reported by George et al. in Gas Separation and Purification, Vol 3, No 2, pp 50-55, 1989. It is believed that the mechanism of hydrocarbon removal involves surface decomposition followed by the diffusion of hydrogen and carbon into the alloy. The operating temperature for the zirconium-based getter is generally in the range of about 350 to about 700°C.

Unit J can be used in the system illustrated in the Figure 1 system , i.e. in combination with cryogenic adsorption system F, if desired. Similarly, unit I can be used in place of cryogenic adsorption system F in a system which does not include unit J, for example, the Figure 1 system.

Operation of the system of Figure 3 is similar to operation of the Figure 1 system. The gas stream exiting chamber A through line 14 is compressed to the desired pressure and introduced into system J, which may be operated at various temperatures, depending upon the particular carbon oxides removal units employed in system J. System J removes substantially all of the carbon monoxide and carbon dioxide contained in the chamber A effluent. The carbon oxides-free gas then passes through unit B and units D and E, if these units are included in the system. The gas stream exiting unit E (when present) next enters unit I, which, as noted above, is operated at a temperature in the range of about 350°C to about 700°C. The gas exiting unit I will be substantially free of nitrogen and hydrocarbons. This gas is then sent to vessel G for storage until need for reuse in vessel A.

It will be appreciated that it is within the scope of the present invention to utilise conventional equipment to monitor and automatically regulate the flow of gases within the system so that it can be fully automated to run continuously in an efficient manner.

The invention is further illustrated by the following hypothetical examples in which, unless otherwise indicated, parts, percentages and ratios are on a volume basis.

### EXAMPLE 1

A vessel containing 10m³ of impure neon at atmospheric pressure is purged with 100m³ of hydrogen over a period of three hours. The impurities in the furnace include 100ppm oxygen, 400ppm nitrogen, 100ppm water, 200ppm methane, 5ppm argon, and 50ppm CO₂. The gas exiting the furnace is compressed to a pressure of 20 bara (2mPa), heated to a temperature of 400°C and passed through a hydrogen membrane cell containing palladium membranes. The hydrogen membrane cell can be obtained from Johnson Matthey of Wayne, PA. Hydrogen at a purity of about 99.9999% will be produced on the permeate side of the membrane and this can be sent to purge gas storage. The residue side of the membrane will contain all the impurities in the feed except oxygen which will be converted to water in the membrane unit. Residue side may also contain up to about 1% hydrogen (which was not removed in the palladium membrane unit).

The gas mixture exiting the palladium membrane is heated to a temperature of 100°C and sent to a bed containing CuO on a silica support. A CuO material available from Engelhard Corporation of Edison, New Jersey can be used for this purpose. Prior to hydrogen removal, the material is oxidised to CuO using a nitrogen stream with 1% O₂ at 100°C. During passage through this bed hydrogen concentration in the gas stream will be reduced to less than 0.1 ppm.

The residue from the CuO-containing vessel is cooled to a temperature of 40°C and sent to an adsorber vessel containing an activated alumina adsorbent (Alcoa F-200, 3mm size) and a 13X zeolite adsorbent (UOP 13XAPG, 6x8 mesh). The vessel can be thermally regenerated with nitrogen prior to gas purification. Both CO₂ and H₂O will be reduced to less than 0.1 ppm in this vessel.

The gas mixture exiting the CuO bed is cooled to a temperature of -150°C and passed over a bed containing CaA zeolite or CaX zeolite, which can be obtained from UOP Company. The nitrogen, and methane impurities will be reduced to less than 0.5ppm each in the this bed.

A neon stream containing less than 2ppm total impurities will be recovered in the process and sent to the noble gas storage. The recovery of neon will be over 90% of that contained in the furnace.

### EXAMPLE 2

The vessel used in Example 1 containing 10m³ of impure neon at atmospheric pressure is purged with 100m³ of steam at 350°C over a period of three hours. Again the impurities in the furnace are assumed to include 100ppm oxygen, 400ppm nitrogen, 100ppm water, 200ppm methane, 5ppm argon, and 50ppm CO₂. The gas exiting the furnace is cooled to temperature of 40°C and the liquid water is removed in a water separator. The gas is then compressed to a pressure of 5 bara, cooled to a temperature of 25°C and again the liquid water is removed in a water separator.

The gas mixture from the second water separator is sent to an adsorber vessel containing an activated alumina adsorbent (Alcoa F-200, 3mm size) and a 13X zeolite adsorbent (UOP 13XAPG, 6x8 mesh). The vessel is thermally regenerated with nitrogen prior to gas purification. Both CO₂ and H₂O will be reduced to less than 0.1 ppm in this vessel.

The gas mixture exiting the vessel containing activated alumina and 13X zeolite is heated to a temperature of 100°C and sent to a bed containing Cu on a silica support. A Cu-getter available from Engelhard Corporation can be used for this purpose. Prior to usage, the copper material is reduced to metallic copper using a nitrogen stream with 1% H₂ at 150°C. During passage through this bed oxygen concentration in the gas stream will be reduced to less than 0.1ppm.

The gas mixture exiting the Cu-getter bed is cooled to a temperature of -150°C and passed over a bed containing 5A zeolite available from UOP. The nitrogen, methane and argon impurities will be reduced to less than 0.5ppm each in the this bed.

A neon stream containing less than 2ppm total impurities is recovered in the process and sent to the noble gas storage. The recovery of neon will be over 90% of that contained in the furnace.

### EXAMPLE 3

The procedure of Example 1 can be repeated to purify an impure neon gas stream containing 100ppm oxygen 100ppm nitrogen, 100ppm water, 200ppm methane, 50ppm carbon monoxide and 50ppm carbon dioxide by the steps used in Example 1 except that the carbon monoxide and carbon dioxide can be removed from the furnace effluent gas prior to passing the gas through the hydrogen membrane cell by contacting the gas with a hopcalite or carulite catalyst at a temperature of about 50°C and the bed of zeolite 13X at ambient temperature, each positioned upstream of the hydrogen membrane cell, and the nitrogen and methane can be removed from the gas stream by replacing the CaX zeolite with a bed of zirconium metal alloy, such as a zirconium-aluminium alloy operated at a temperature of about 500°C. An advantage of using the system of this example is that additional methane is not produced in the hydrogen membrane cell.

Although the invention has been described with particular reference to specific equipment arrangements and to specific gas separations, these features are merely exemplary of the invention and variations are contemplated. For example, impurities other than those described herein can be removed from the noble gas stream by the described or other gas separation techniques, and impurities other than gaseous impurities can be removed from the noble gas stream. Also, the source of noble gas to be recovered can be processes other than plasma display panel manufacture.

## Claims

1. A method of recovering noble gas from a chamber in which a treatment operation involving the use of substantially pure noble gas is carried out, the method comprising:
a) evacuating the chamber;
b) introducing the noble gas into the chamber so as to perform the treatment operation;
c) passing a purge gas through the chamber, thereby purging substantially all of the noble gas from the chamber and producing a gaseous effluent comprising the noble gas and the purge gas;
d) separating a noble gas stream and a substantially noble gas-free fraction from the gaseous effluent, and
e) removing trace impurities from the noble gas stream, rendering the noble gas stream sufficiently pure as to be recyclable for re-use in the said treatment operation.

2. A method as claimed in claim 1, wherein the separated noble gas stream and/or the separated noble gas-free fraction, is/are recycled to the chamber.

3. A method as claimed in claim 1 or claim 2, where the noble gas is xenon, neon or a mixture thereof.

4. A method as claimed in claim 3, wherein the noble gas comprises about 50 to about 100 volume % neon and about 50 to about 0 volume % xenon.

5. A method as claimed in any preceding claim, wherein the purge gas is hydrogen, oxygen or steam.

6. A method as claimed in claim 5, wherein the purge gas is hydrogen and the noble gas stream is separated from the gaseous effluent gas by membrane separation using a membrane which comprises palladium.

7. A method as claimed in claim 6, wherein prior to the membrane separation one or both of carbon monoxide and carbon dioxide are removed from the gaseous effluent.

8. A method as claimed in claim 6 or claim 7, wherein the membrane separation is carried out at a temperature of about 200ºC to about 600ºC and a pressure of about 3 to about 40 bara (about 0.3 to about 4 mpa).

9. A method as claimed in claim 6, claim 7 or claim 8, wherein the gaseous effluent contains oxygen and the palladium effects the reaction of the oxygen and the hydrogen to produce water vapour.

10. A method as claimed in claim 9, further comprising removing the water vapour from the noble gas stream by subjecting the noble gas stream to a temperature swing adsorption process using a desiccant selected from silica, alumina, zeolite A, zeolite X and mixtures of these.

11. A method as claimed in claim 5, wherein the purge gas is oxygen and the membrane used in the membrane separation is an ion-conducting membrane.

12. A method as claimed claim 5, wherein the purge gas is steam and the noble gas stream is separated from said gaseous effluent by condensation.

13. A method as claimed in any preceding claim, wherein the chamber is part of a furnace, and wherein the said treatment operation comprises the manufacture of display panels containing noble gas by heat sealing pairs of planar sections together to form a gas-tight enclosure in an atmosphere containing the noble gas.

14. A method as claimed in claim 13, wherein one or both members of each pair of planar sections have a bead of heat sensitive adhesive around its periphery, and the said planar sections are sealed by heating the planar sections in close proximity to each other to a temperature of at least about 350ºC at a pressure of about 1.5 to about 2 bara (about 150 to about 200 kpa).

15. A method as claimed in any preceding claim, wherein the noble gas stream contains an impurity selected from the group consisting of water vapour, carbon dioxide and hydrocarbons having 2 or more carbon atoms and mixtures of these, and wherein the impurity is removed from the noble gas stream by an adsorption process carried out at a temperature in the range of about 0ºC to about 200ºC using an adsorbent selected from the group consisting of silica gel, activated alumina, zeolites, activated carbon and mixtures of these.

16. A method as claimed in any preceding claim, wherein the noble gas stream contains hydrogen, oxygen or both of these, and these are removed from the noble gas stream by chemisoprtion carried out at a temperature in the range of about 25ºC to about 200ºC using a copper getter, a copper oxide getter, a nickel getter or mixtures of these.

17. A method as claimed in claim 16, wherein water vapour is formed upon contact of the noble gas stream with the getter, and wherein the water vapour is removed by contacting the noble gas stream with a desiccant selected from the group consisting of silica, alumina, zeolite A, zeolite X and mixtures of these.

18. A method as claimed in any preceding claim, wherein the noble gas stream contains nitrogen, methane, carbon monoxide or mixtures of these, and wherein these are removed from the noble gas stream by cryogenic adsorption carried out at a temperature in the range of about -50ºC to about -200ºC using an adsorbent selected from the group consisting of zeolite 4A, zeolite 5A, type X zeolite and mixtures of these.

19. A method as claimed in any preceding claim, wherein the noble gas stream contains nitrogen, hydrocarbons or mixtures of these, and wherein these are removed from the noble gas stream by chemisorption carried out at a temperature in the range of about 350ºC to about 700ºC using a zirconium-based material.

20. A method as claimed in claim 19, wherein the zirconium-based material is a zirconium-aluminium alloy, a zirconium-vanadium-iron alloy or a mixture of these.

## Patentansprüche

1. Verfahren zur Rückgewinnung von Edelgas aus einer Kammer, in welcher ein Behandlungsvorgang unter Verwendung im wesentlichen reinen Edelgases augeführt wird, wobei das Verfahren umfasst:
a) Evakuieren der Kammer,
b) Einleiten des Edelgases in die Kammer, um den Behandlungsvorgang auszuführen,
c) Leiten eines Spülgases durch die Kammer, wodurch im wesentlichen sämtliches Edelgas aus der Kammer ausgespült und ein gasförmiger Ausfluß erzeugt wird, der das Edelgas und das Spülgas enthält,
d) Trennen eines Edelgasstroms und einer im wesentlichen Edelgasfreien Fraktion aus dem gasförmigen Ausfluß, und
e) Abscheiden von Spurenverunreinigungen aus dem Edelgasstrom, wodurch der Edelgasstrom ausreichend rein gemacht wird, um zur Wiederverwendung in dem genannten Behandlungsvorgang rezirkulierbar zu sein.

2. Verfahren nach Anspruch 1, wobei der abgetrennte Edelgasstrom und/oder die abgetrennte Edelgasfreie Fraktion zu der Kammer rezirkuliert wird.

3. Verfahren nach Anspruch 1 oder 2, wobei das Edelgas Xenon, Neon oder ein Gemisch hiervon ist.

4. Verfahren nach Anspruch 3, wobei das Edelgas etwa 50 bis etwa 100 Volumenprozent Neon und etwa 50 bis etwa 0 Volumenprozent Xenon enthält.

5. Verfahren nach einem der vorhergehenden Ansprüche, wobei das Spülgas Wasserstoff, Sauerstoff oder Dampf ist.

6. Verfahren nach Anspruch 5, wobei das Spülgas Wasserstoff ist und der Edelgasstrom aus dem gasförmigen Ausflussgas durch Membrantrennung unter Verwendung einer Palladium enthaltenden Membran abgetrennt wird.

7. Verfahren nach Anspruch 6, wobei vor der Membrantrennung einer oder beide der Stoffe Kohlenmonoxid und Kohlendioxid aus dem gasförmigen Ausfluß abgeschieden wird bzw. werden.

8. Verfahren nach Anspruch 6 oder 7, wobei die Membrantrennung bei einer Temperatur von etwa 200°C bis etwa 600°C und einem Druck von etwa 3 bis etwa 40 bara (etwa 0,3 bis etwa 4 MPa) ausgeführt wird.

9. Verfahren nach Anspruch 6, 7 oder 8, wobei der gasförmige Ausfluß Sauerstoff enthält und das Palladium die Reaktion des Sauerstoffs und des Wasserstoffs zum Erzeugen von Wasserdampf bewirkt.

10. Verfahren nach Anspruch 9, das weiter das Abscheiden des Wasserdampfs aus dem Edelgasstrom umfasst, indem der Edelgasstrom einem Temperaturwechsel-Adsorptionsprozeß unter Verwendung eines Trockungsmittels ausgesetzt wird, das aus Silika, Aluminiumoxid, Zeolith A, Zeolith X und Gemischen hiervon ausgewählt ist.

11. Verfahren nach Anspruch 5, wobei das Spülgas Sauerstoff ist und die bei der Membrantrennung verwendete Membran eine ionenleitende Membran ist.

12. Verfahren nach Anspruch 5, wobei das Spülgas Dampf ist und der Edelgasstrom aus dem gasförmigen Ausfluß durch Kondensation abgetrennt wird.

13. Verfahren nach einem der vorhergehenden Ansprüche, wobei die Kammer Teil eines Ofens ist, und wobei der genannte Behandlungsvorgang die Fertigung von Anzeigetafeln umfasst, die Edelgas enthalten, indem Paare ebener Abschnitte zur Bildung einer gasdichten Hülle in einer das Edelgas enthaltenden Atmosphäre wärmeverschweißt werden.

14. Verfahren nach Anspruch 13, wobei eines oder beide Teile jedes Paars ebener Abschnitte einen Wulst wärmeempfindlichen Klebstoffs entlang seiner Periferie aufweist und die ebenen Abschnitte durch Erwärmen der ebenen Abschnitte in enger Nähe zueinander auf eine Temperatur von mindestens etwa 350°C und einem Druck von etwa 1,5 bis etwa 2 bara (etwa 150 bis etwa 200 kPa) verschweißt werden.

15. Verfahren nach einem der vorhergehenden Ansprüche, wobei der Edelgasstrom eine aus der Gruppe Wasserdampf, Kohlendioxid und Kohlenwasserstoffe mit zwei oder mehr Kohlenstoffatomen und Gemischen von diesen ausgewählte Verunreinigung enthält, und wobei die Verunreinigung aus dem Edelgasstrom durch einen Adsorptionsprozess abgeschieden wird, der bei einer Temperatur im Bereich von etwa 0°C bis etwa 200°C unter Verwendung eines Adsorptionsmittels ausgeführt wird, das aus der Gruppe Silikagel, aktiviertes Aluminiumoxid, Zeolithe, Aktivkohle und Gemischen von diesen ausgewählt ist.

16. Verfahren nach einem der vorhergehenden Ansprüche, wobei der Edelgasstrom Wasserstoff, Sauerstoff oder diese beiden enthält, und wobei diese aus dem Edelgasstrom durch Chemisorption abgeschieden werden, die bei einer Temperatur im Bereich von etwa 25°C bis etwa 200°C unter Verwendung eines Kupfergetters, eines Kupferoxidgetters, eines Nickelgetters oder Gemischen von diesen ausgeführt wird.

17. Verfahren nach Anspruch 16, wobei Wasserdampf bei Kontakt des Edelgasstroms mit dem Getter gebildet wird, und wobei der Wasserdampf durch Kontaktieren des Edelgasstroms mit einem Trocknungsmittel abgeschieden wird, daß aus der Gruppe Silika, Aluminiumoxid, Zeolith A, Zeolith X und Gemischen von diesen ausgewählt ist.

18. Verfahren nach einem der vorhergehenden Ansprüche, wobei der Edelgasstrom Stickstoff, Methan, Kohlenmonoxid oder Gemische von diesen enthält, und wobei diese aus dem Edelgasstrom durch kryogene Adsorption abgeschieden werden, die bei einer Temperatur im Bereich von etwa -50°C bis etwa -200°C unter Verwendung eines Adsorptionsmittels ausgeführt wird, das aus der Gruppe Zeolith 4A, Zeolith 5A, Typ-X-Zeolith und Gemischen von diesen ausgewählt ist.

19. Verfahren nach einem der vorhergehenden Ansprüche, wobei der Edelgasstrom Stickstoff, Kohlenwasserstoffe oder Gemischen von diesen enthält, und wobei diese aus dem Edelgasstrom durch Chemisorption abgeschieden werden, die bei einer Temperatur im Bereich von etwa 350°C bis etwa 700°C unter Verwendung eines Materials auf Zirkoniumbasis ausgeführt wird.

20. Verfahren nach Anspruch 19, wobei das Zirkoniumbasismaterial eine Zirkonium-Aluminium-Legierung, eine Zirkonium-Vanadium-Eisen-Legierung oder ein Gemisch von diesen ist.

## Revendications

1. Procédé de récupération d'un gaz rare venant d'une chambre dans laquelle est effectuée une opération de traitement impliquant l'utilisation d'un gaz rare essentiellement pur, le procédé comprenant :
(a) l'évacuation de la chambre ;
(b) l'introduction du gaz rare dans la chambre afin d'effectuer l'opération de traitement ;
(c) le passage d'un gaz de purge dans la chambre, purgeant ainsi sensiblement tout le gaz rare de la chambre et produisant un effluent gazeux comprenant le gaz rare et le gaz de purge ;
(d) la séparation d'un flux de gaz rare et d'une fraction de l'effluent gazeux essentiellement exempte de gaz rare d'avec l'effluent gazeux, et
(e) l'élimination d'impuretés traces du flux de gaz rare, rendant ainsi le flux de gaz rare suffisamment pur pour être recyclable en vue d'une réutilisation dans ladite opération de traitement.

2. Procédé selon la Revendication 1, dans lequel le flux de gaz rare séparé et/ou la fraction exempte de gaz rare séparée est/sont recyclés vers la chambre.

3. Procédé selon la Revendication 1 ou 2, dans lequel le gaz rare est du xénon, du néon ou un mélange de ceux-ci.

4. Procédé selon la Revendication 3, dans lequel le gaz rare comprend environ 50 à environ 100 % de néon en volume et environ 50 à environ 0 % de xénon en volume.

5. Procédé selon l'une quelconque des Revendications précédentes, dans lequel le gaz de purge est de l'hydrogène, de l'oxygène ou de la vapeur.

6. Procédé selon la Revendication 5, dans lequel le gaz de purge est l'hydrogène et le flux de gaz rare est séparé de l'effluent gazeux par séparation sur membrane utilisant une membrane qui comprend du palladium.

7. Procédé selon la Revendication 6, dans lequel, avant la séparation sur membrane, l'un ou l'autre du monoxyde de carbone et du dioxyde de carbone, ou les deux, sont éliminés de l'effluent gazeux.

8. Procédé selon la Revendication 6 ou 7, dans lequel la séparation sur membrane est effectuée à une température comprise entre environ 200°C et environ 600°C et à une pression comprise entre environ 3 à environ 40 bara (environ 0,3 à environ 4 mpa).

9. Procédé selon la Revendication 6, la Revendication 7 ou la Revendication 8, dans lequel l'effluent gazeux contient de l'oxygène et le palladium réalise la réaction de l'oxygène et de l'hydrogène produisant la vapeur d'eau.

10. Procédé selon la Revendication 9, comprenant de plus l'élimination de la vapeur d'eau hors du flux de gaz rare par soumission du flux de gaz rare à un procédé d'adsorption à variation de la température en utilisant un déshydratant choisi parmi la silice, l'alumine, une zéolithe de type A, une zéolithe de type X ou des mélanges de celles-ci.

11. Procédé selon la Revendication 5, dans lequel le gaz de purge est l'oxygène et la membrave utilisée dans la séparation sur membrane est une membrane conductrice ionique.

12. Procédé selon la Revendication 5, dans lequel le gaz de purge est la vapeur et le flux de gaz rare est séparé dudit effluent gazeux par condensation.

13. Procédé selon l'une quelconque des Revendications précédentes, dans lequel la chambre est une partie d'un four et dans lequel ladite opération de traitement comprend la fabrication de panneaux d'affichage contenant du gaz rare en scellant à chaud ensemble par paires des sections planes pour former une enceinte étanche aux gaz dans une atmosphère contenant le gaz rare.

14. Procédé selon la Revendication 13, dans lequel l'un ou les deux éléments de chaque paire de sections planes a(ont) un cordon d'adhésif thermosensible autour de sa(leur) périphérie, et lesdites sections planes sont scellées par chauffage des sections planes à proximité étroite l'une de l'autre à une température d'au moins 350°C environ à une pression d'environ 1,5 à environ 2 bara (environ 150 à environ 200 kpa).

15. Procédé selon l'une quelconque des Revendications précédentes, dans lequel le flux de gaz rare contient une impureté choisie dans le groupe composé de la vapeur d'eau, le dioxyde de carbone et les hydrocarbures ayant deux atomes de carbone ou plus, et des mélanges de ceux-ci, et dans lequel l'impureté est éliminée du flux de gaz rare par un procédé d'adsorption effectué à une température comprise dans une plage de 0°C environ à 200°C environ, en utilisant un adsorbant choisi dans le groupe composé du gel de silice, de l'alumine active, des zéolithes, du charbon actif et de mélanges de ceux-ci.

16. Procédé selon l'une quelconque des Revendications précédentes, dans lequel le flux de gaz rare contient de l'hydrogène, de l'oxygène ou les deux, et ceux-ci sont éliminés du flux de gaz rare par chimisorption effectuée à une température dans une plage de 25°C environ à 200°C environ, en utilisant un getter au cuivre, un getter à l'oxyde de cuivre, un getter au nickel ou des mélanges de ceux-ci.

17. Procédé selon la Revendication 16, dans lequel de la vapeur d'eau se forme au contact du flux de gaz rare avec le getter, et dans lequel la vapeur d'eau est éliminée en mettant en contact le flux de gaz rare avec un déshydratant choisi dans le groupe composé de la silice, l'alumine, les zéolithes de type A, les zéolithes de type X, et des mélanges de ceux-ci.

18. Procédé selon l'une quelconque des Revendications précédentes, dans lequel le flux de gaz rare contient de l'azote, du méthane, du monoxyde de carbone, ou des mélanges de ceux-ci, et dans lequel ceux-ci sont éliminés du flux de gaz rare par adsorption cryogénique effectuée à une température comprise dans une plage de -50°C environ à -200°C environ en utilisant un adsorbant choisi dans le groupe composé des zéolithes de type 4A, des zéolithes de type SA, des zéolithes de type X et de mélanges de celles-ci.

19. Procédé selon l'une quelconque des Revendications précédentes, dans lequel le flux de gaz rare contient de l'azote, des hydrocarbures ou des mélanges de ceux-ci, et dans lequel ceux-ci sont éliminés du flux de gaz rare par chimisorption effectuée à une température comprise dans une plage de 350°C environ à 700°C environ en utilisant un matériau à base de zirconium.

20. Procédé selon la Revendication 19, dans lequel le matériau à base de zirconium et un alliage zirconium-aluminium, un alliage zirconium-vanadium-fer ou un mélange de ceux-ci.
